# EUROPEAN PATENT SPECIFICATION

(11) **EP 1 736 747 B1**
(45) Date of publication and mention of the grant of the patent: **03.10.2012**
(21) Application number: 06012774.3
(22) Date of filing: 21.06.2006
(51) Int. Cl.: G01G 19/08, G01G 21/23

(54) **Weighing device**
Wiegevorrichtung
Dispositif de pesage

(30) Priority: 21.06.2005 BE 200500313
(43) Date of publication of application: 27.12.2006
(73) Proprietor: Van de Vliet, Ronny, 2300 Turnhout (BE)
(72) Inventor: Van de Vliet, Ronny, 2300 Turnhout (BE)
(74) Representative: Donné, Eddy

(56) References cited:
- EP-A- 1 111 353
- BE-A3- 1 016 392
- NL-C2- 1 012 036

## Description

The present invention concerns a weighing element.

In particular, the present invention concerns a weighing element which is designed for weighing the load of a vehicle, whereby the loading platform of the vehicle, such as a body, tank or the like, rests on the weighing element.

Such weighing elements are already known, for example from NL 1.012.036, consisting of an inner beam-shaped element which is provided in a central opening in an outer beam-shaped element, whereby both beam-shaped elements are coupled by a pair of force readers which are provided between the crosscut ends of the inner beam-shaped element and the corresponding crosscut ends of the outer beam-shaped element.

In the case of these known weighing elements, the inner beam-shaped element is provided on the chassis of the vehicle, whereas the outer beam-shaped element is connected to the loading platform of the vehicle.

A disadvantage of these known weighing elements is that they have to be provided on top of an already existing chassis of a vehicle, such that the load is raised, which is disadvantageous to the stability of the vehicle.

Moreover, the above-mentioned weighing elements are not fit to absorb the eccentric forces or moments that usually occur with moving vehicles, so that usually additional measures must be taken, for example by enlarging the dimensions of the vehicle's chassis.

Also, the present invention aims to remedy one or several of the above-mentioned and other disadvantages.

To this end, the present invention concerns a weighing element which at least consists of a frame and of two pairs of force readers on two opposite sides of the frame, whereby the force readers of each above-mentioned pair are situated at a distance from each other in the direction of the above-mentioned opposite sides and extend in a direction crosswise to the above-mentioned opposite sides, whereby the force readers are further coupled to the frame of the weighing element with one far end, whereas the other far ends of the force readers of an aforesaid pair are connected by means of a connecting piece which extends in the direction of the opposite sides, and whereby these connection pieces are designed as a support for providing a loading platform of a vehicle or the like.

A first advantage of such a weighing element according to the invention is that it can be easily integrated in the chassis of a vehicle or, better still, can be used to form the chassis of a vehicle.

For, thanks to the mutual arrangement of the force readers and the connection pieces in relation to the undercarriage, it is possible to directly couple the undercarriages of two or more weighing elements according to the invention directly to each other, for example by providing supporters on them in the direction of the above-mentioned opposite sides.

A lot of space is saved in this manner, and the load no longer has to be provided higher on the vehicle, as is the case with the known weighing elements, which is very beneficial to the stability of the vehicle.

Another advantage of such a weighing element according to the invention consists in that it is provided with four force readers, as a result of which the weighing element is a very stable construction as such which can resist the most varying forces and moments, so that additional modifications to the chassis of a vehicle are no longer required.

According to a preferred embodiment of a weighing element in conformity with the invention, the connection pieces of the pairs of force readers are moreover coupled to each other by means of a transverse connection.

An advantage of such a weighing element according to this embodiment is that the additional transverse connection provides extra stability to the weighing element.

The invention also concerns the chassis of a vehicle of which at least a part is formed of two or more weighing elements according to the invention.

In order to better explain the characteristics of the invention, the following preferred embodiments of a weighing element according to the invention are described as an example only without being limitative in any way, with reference to the accompanying drawings, in which:
figure 1 is a top view of a weighing element according to the invention;
figures 2 to 4 are sections of the weighing element from figure 1, according to line II-II in figure 1, line III-III in figure 2 and line IV-IV in figure 1 respectively;
figure 5 illustrates the application of a weighing element in the chassis of a lorry;
figures 6 and 7 represent, analogous to figures 2 and 3, an embodiment of a weighing element according to the invention in which the force readers have been placed the other way round;
figure 8 represents a section analogous to figure 4 for yet another embodiment, whereby the coupling with the loading platform is modified; and,
figure 9, analogous to figure 3, represents an embodiment with slantingly erected force readers.

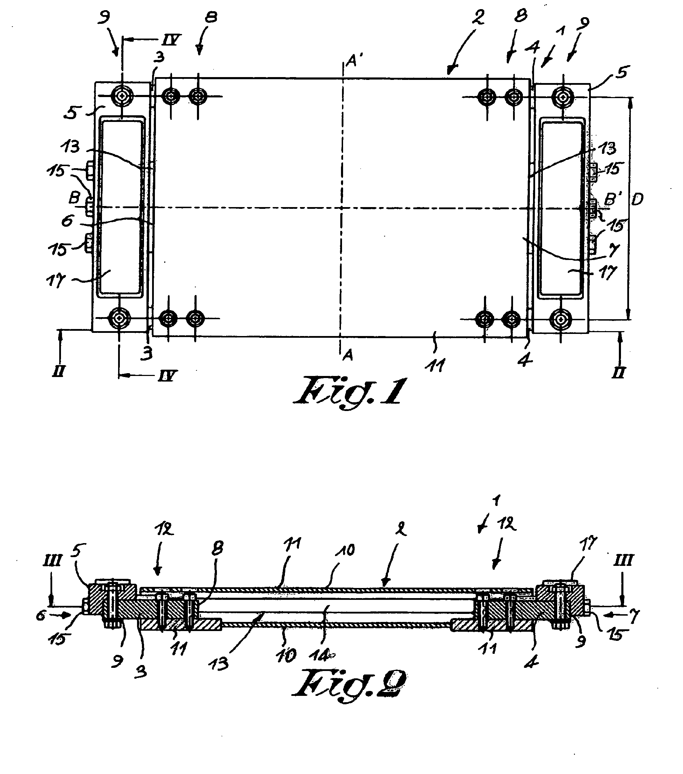

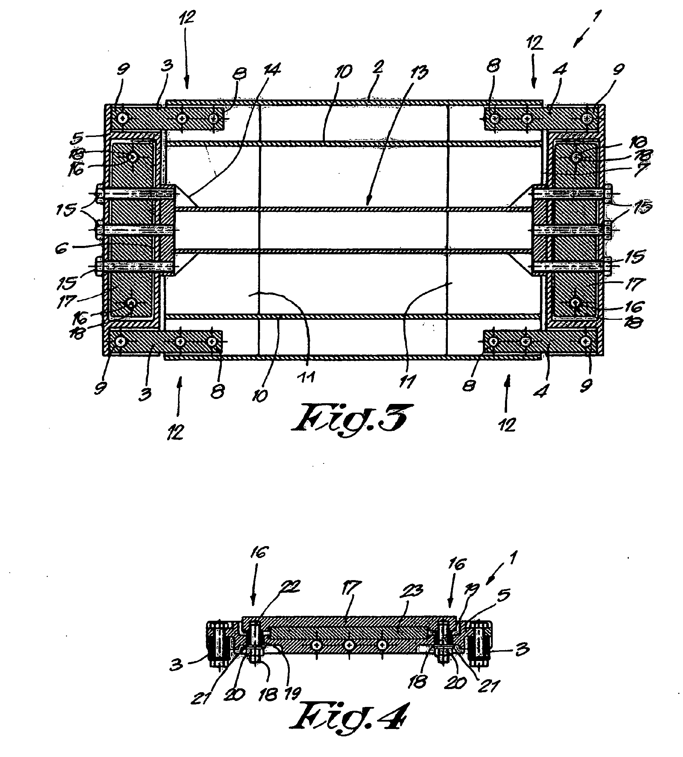

The weighing element 1 according to the invention represented in figures 1 to 4 is mainly formed of an undercarriage 2, a first pair of force readers 3, a second pair of force readers 4 and two connection pieces 5.

In the example shown, the undercarriage 2 is mainly beam-shaped or rectangular and the force readers 3 and 4 are provided in pairs, on two opposite sides 6 and 7 of the undercarriage 2 respectively.

The force readers 3, as well as the force readers 4, are situated at a distance D from each other in the direction AA' of the above-mentioned opposite sides 6 and 7.

It is particularly important hereby that the force readers 3 and 4 extend in the direction BB', crosswise to the opposite sides 6 and 7.

Moreover, all force readers 3 and 4 are coupled to the undercarriage 2 of the weighing element 1 with their one far end 8.

The other far ends 9 of the force readers 3, as well as the other far ends 9 of the force readers 4, are connected to each other by means of an aforesaid connection piece 5, whereby it is particularly noteworthy that these connection pieces 5 extend in the direction AA' of the opposite sides 6 and 7.

According to a preferred embodiment and, as is also represented in figures 1 to 4, the undercarriage 2 is mainly formed of two longitudinal struts 10 that are coupled to each other.

In the example of figures 1 to 4, the longitudinal struts 10 are coupled by means of plates 11.

The longitudinal struts 10 are further provided parallel in relation to each other and preferably extend crosswise to the opposite sides 6 and 7, i.e. in the direction BB'.

Moreover, in the given example, the above-mentioned longitudinal struts are hollow, whereby one of the force readers 3 and 4 is provided with its one far end 8 in each crosscut end 12 of each strut 10.

Thus is obtained a very compact arrangement.

In order to restrict the freedom of movement of the connection pieces in relation to each other, the connection pieces 5 of the pairs of force readers 3 and 4, as is the case in the example of figures 1 to 4, may be coupled to each other by means of a transverse connection 13.

In the given example, this transverse connection 13 consists of a metal frame 14 which is provided on the connection pieces 5 by means of bolts 15.

One preferably makes sure that such a transverse connection 13 can move within the outlines of the undercarriage, for example as is the case in figures 1 to 4, by providing the transverse connection 13 between the longitudinal struts 10 and the plates 11 of the undercarriage 2 with sufficient play.

The connection pieces 5 are further provided with coupling elements 16 to put the weighing element 1 into contact with a loading platform 17 which may be for example a part of a loading floor, body, tank or the like.

In the example of figures 1 to 4, the coupling elements 16 are provided with a guide which makes it possible to restrict the movement of the loading platform 17 in relation to the weighing element 1 to mainly a single direction.

To this end, the coupling elements 16 consist of bolts 18 which are provided through bore holes 19 in the connection pieces 5, whereby the head 20 of the bolts 18 rests on the connection piece 5 via a cup spring 21, and the foot 22 of the bolts 18 is secured in the loading platform 17 on which the load can rest.

The bolts 18 can be locked by making use of a securing bolt or for example also by means of gluing.

It is made sure that the bolts 18 have sufficient play in the bore holes 19, and also the cup springs 21 provide for a certain freedom of movement of the connection piece 5 in relation to the loading platform 17.

In this manner is obtained that the force readers 3 and 4 can undergo a transformation before measuring a weight without being hindered in the vertical direction.

On the other hand, the coupling elements 16 make sure that the loading platform 17 cannot be detached from the weighing element 1 and thus that the load cannot get lost.

In the given example, an elastic plastic or rubber 23 is moreover provided between the part 22 and the connection pieces 5, as a result of which a certain damping is obtained which protects the force readers 3 and 4 against overloads, especially in the case of a shock load, such as when driving through pits or the like.

It is clear that such a weighing element 1 according to the invention, thanks to the presence of four force readers 3 and 4 on the corners of the weighing element 1, is much stabler than the known weighing elements.

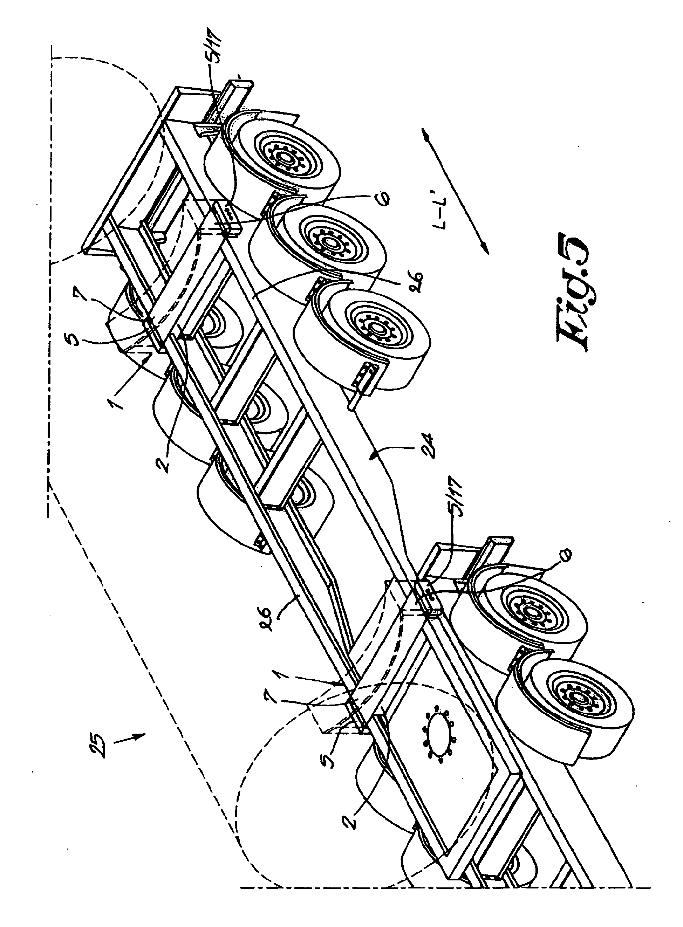

Figure 5 illustrates how a weighing element 1 according to the invention can be used for manufacturing a chassis 24 of a vehicle 25.

One only has to couple two or more weighing elements 1 to each other, for example, as is represented in figure 5, by providing supporters 26 crosswise to the longitudinal struts 10 of the undercarriages 2, for example by welding the supporters 26 on the longitudinal struts 10 or by screwing them down on the latter.

In other words, the weighing elements 1 are placed such that the direction AA' of the opposite sides 6 and 7 of the weighing elements 1 corresponds to the longitudinal direction LL' of the vehicle 25.

In this manner is obtained a very compact structure, which makes it possible to provide a loading platform 17 with a load 27 in it on a vehicle 25 which is provided with weighing elements, without thereby necessarily raising this loading platform 27 higher than would be the case if the vehicle 25 was not provided with weighing elements 1.

Thus, such a chassis 24 with weighing elements 1 according to the invention is very advantageous to the stability of the vehicle 25.

The load 27 is not weighed any differently than with the known weighing elements, i.e. by measuring the transformation of the force readers 3 and 4 under the weight of the load 27.

The transformation is hereby converted to a certain weight, which may be done automatically for example by means of a board computer which is connected to the force readers 3 and 4.

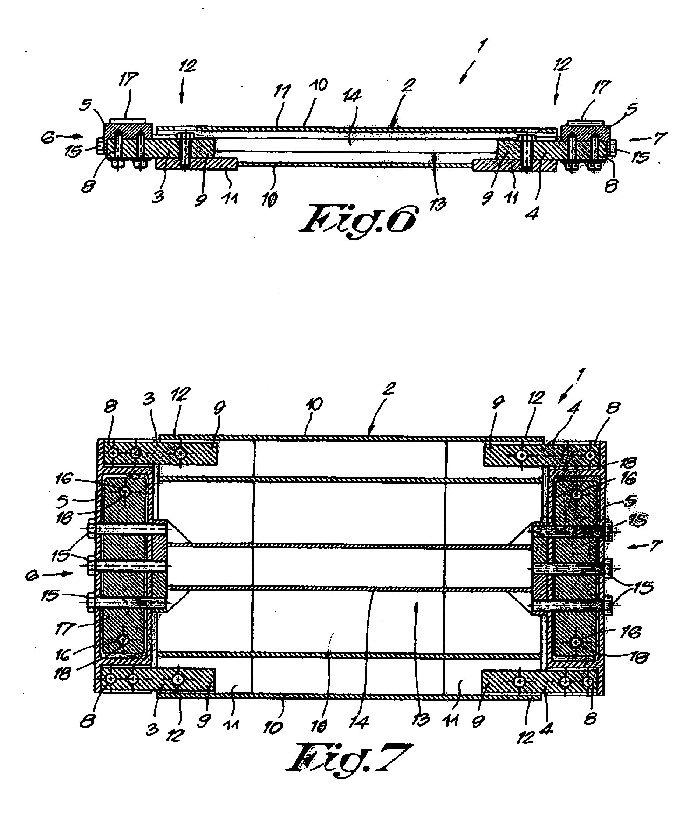

Figures 6 and 7 represent another embodiment of a weighing element 1 according to the invention, which illustrates that it is just as well possible to mount the force readers the other way round, whereby, in other words, one far end 8 of the force readers 3 and 4 is fixed to a connection piece 5, whereas the other far end 9 is connected to the undercarriage 2 by means of the coupling elements 16 which offer a certain freedom of movement so as not to hinder the transformation of the force readers 3 and 4.

It is clear that in this manner is obtained a weighing element 1 according to the invention which further offers exactly the same advantages as the embodiment from figures 1 to 4.

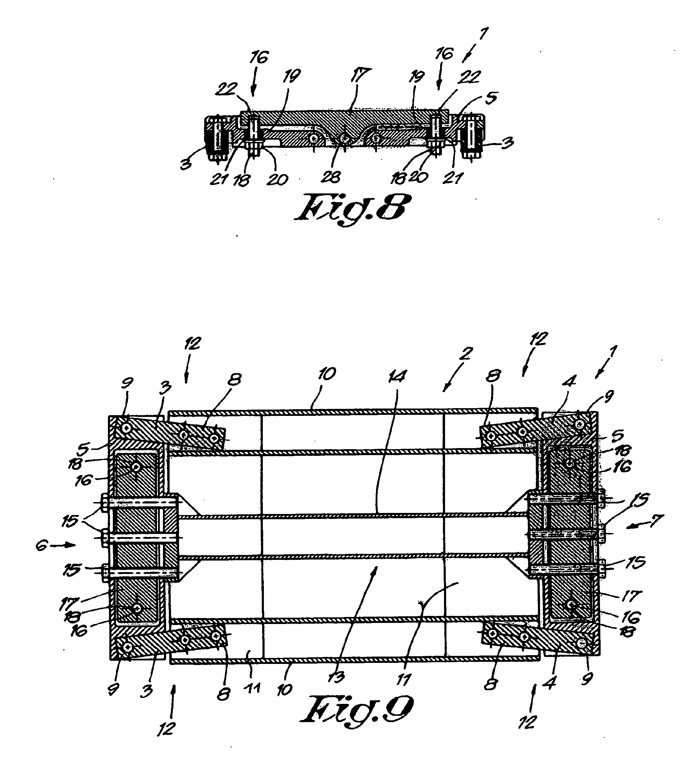

Figure 8 represents another embodiment whereby the coupling elements 16 are provided with a hinge point 28, such that in this embodiment, the load 27 has a certain freedom of rotation in relation to the weighing element 1, which may be useful to absorb forces while taking a bend for example.

In the given embodiment are additionally provided bolts 18, although this is not strictly necessary.

Figure 9 illustrates that the force readers 3 and 4 do not necessarily have to extend in a direction crosswise to the opposite sides 6 and 7 of the undercarriage 2, but that it is just as well possible to place the force readers 3 and 4 for example slantingly in relation to these opposite sides 6 and 7.

Again, this does not fundamentally change the working of the weighing elements 1.

It is clear that many other embodiments of a weighing element 1 according to the invention are possible as well, whereby the same advantages of stability are obtained for the weighing element 1 itself, as well as for a load 27 on the vehicle 25.

It is for example possible to realise the coupling elements 16 in such a manner that an entirely fixed connection is obtained between the loading platform 17 and the weighing element 1.

Other possibilities for the coupling means 16 are for example a coupling by means of a ball bearing, a rocker pen, a combination of a knife and socket or by simply applying a rubber or elastic plastic.

Further, many alternatives are possible for the undercarriage 2 and the transverse connection 13.

The present invention is by no means restricted to the embodiments given as an example and represented in the accompanying drawings; on the contrary, such a weighing element according to the invention can be made in different shapes and dimensions while still remaining within the scope of the invention.

## Claims

1. Weighing element (1), **characterised in that** it at least consists of an undercarriage (2) and of two pairs of force readers (3,4) on two opposite sides (6,7) of the undercarriage (2), whereby the force readers (3,4) of each pair are situated at a distance (D) from each other in the direction (AA') of the above-mentioned opposite sides (6,7) and extend in a direction (BB') crosswise or slantingly to the above-mentioned opposite sides (6,7), whereby the force readers (3,4) are further coupled with one far end (8) to the undercarriage (2) of the weighing element (1), whereas the other far ends (9) of the force readers (3,4) of an aforesaid pair are connected by means of a connection piece (5) which extends in the direction (AA') of the opposite sides.

2. Weighing element according to claim 1, **characterised in that** the undercarriage (2) is mainly formed of two longitudinal struts (10) which are coupled to each other.

3. Weighing element according to claim 2, **characterised in that** the longitudinal struts (10) are provided parallel in relation to each other.

4. Weighing element according to claim 2 or 3, **characterised in that** the longitudinal struts (10) extend in a direction (BB') crosswise to the above-mentioned opposite sides (6,7).

5. Weighing element according to any one of claims 2 to 4, **characterised in that** the above-mentioned longitudinal struts (10) are coupled by means of a plate (11).

6. Weighing element according to any one of claims 2 to 5, **characterised in that** the above-mentioned longitudinal struts (10) are hollow and **in that** in each crosscut end (12) of each longitudinal strut (10) is provided one of the force readers (3,4).

7. Weighing element according to any one of the preceding claims, **characterised in that** the connection pieces (5) of the pairs of force readers (3,4) are coupled to each other by means of a transverse connection (13).

8. Weighing element according to claims 2 and 7, **characterised in that** the above-mentioned transverse connection (13) is provided between the longitudinal struts (10) of the undercarriage (2).

9. Weighing element according to any one of the preceding claims, **characterised in that** coupling elements (16) are provided for providing a loading platform (17).

10. Weighing element according to claim 9, **characterised in that** the coupling elements (16) are provided with a hinge point (28).

11. Weighing element according to claim 9 or 10, **characterised in that** the coupling elements (16) are provided with a guide which makes it possible to restrict the movement of the loading platform (17) in relation to the weighing element (1) to mainly one direction.

12. Weighing element according to any one of the preceding claims, **characterised in that** it is integrated in or is part of the chassis (24) of a vehicle (25).

13. Chassis (24) of a vehicle (25), **characterised in that** at least a part is formed of two or more weighing elements (1) according to any one of the preceding claims.

14. Chassis according to claim 13, **characterised in that** the direction (AA') of opposite sides (6,7) of the weighing elements (1) corresponds to the longitudinal direction (LL') of the vehicle (25).

## Patentansprüche

1. Wiegeelement (1), **dadurch gekennzeichnet, dass** es mindestens aus einem Untergestell (2) und aus zwei Paaren von Kraftaufnehmern (3, 4) an zwei gegenüberliegenden Seiten (6, 7) des Untergestells (2) besteht, wobei die Kraftaufnehmer (3, 4) jedes Paars sich in einem Abstand (D) voneinander in der Richtung (AA') der vorgenannten gegenüberliegenden Seiten (6, 7) befinden und sich in einer Richtung (B,B') quer oder schräg zu den vorgenannten gegenüberliegenden Seiten (6, 7) erstrecken, wobei die Kraftaufnehmer (3, 4) weiter mit einem Ende (8) an das Untergestell (2) des Wiegeelements (1) gekoppelt sind, während die anderen Enden (9) der Kraftaufnehmer (3, 4) eines vorgenannten Paars mittels eines Verbindungsstücks (5), das sich in der Richtung (AA') der gegenüberliegenden Seiten erstreckt, verbunden sind.

2. Wiegeelement nach Anspruch 1, **dadurch gekennzeichnet, dass** das Untergestell (2) im Wesentlichen durch zwei Längsbalken (10) gebildet wird, die aneinandergekoppelt sind.

3. Wiegeelement nach Anspruch 2, **dadurch gekennzeichnet, dass** die Längsbalken (10) in Bezug zueinander parallel angebracht sind.

4. Wiegeelement nach Anspruch 2 oder 3, **dadurch gekennzeichnet, dass** die Längsbalken (10) sich in einer Richtung (BB') quer zu den vorgenannten gegenüberliegenden Seiten (6, 7) erstrecken.

5. Wiegeelement nach einem der Ansprüche 2 bis 4, **dadurch gekennzeichnet, dass** die vorgenannten Längsbalken (10) mittels einer Platte (11) gekoppelt sind.

6. Wiegeelement nach einem der Ansprüche 2 bis 5, **dadurch gekennzeichnet, dass** die vorgenannten Längsbalken (10) hohl sind und dass in jedem stirnseitigen Ende (12) jedes Längsbalkens (10) einer der Kraftaufnehmer (3, 4) vorgesehen ist.

7. Wiegeelement nach einem der vorgenannten Ansprüche, **dadurch gekennzeichnet, dass** die Verbindungsstücke (5) der Paare von Kraftaufnehmern (3, 4) mittels einer Querverbindung (13) aneinandergekoppelt sind.

8. Wiegeelement nach Ansprüchen 2 und 7, **dadurch gekennzeichnet, dass** die vorgenannte Querverbindung (13) zwischen den Längsbalken (10) des Untergestells (2) vorgesehen ist.

9. Wiegeelement nach einem der vorgenannten Ansprüche, **dadurch gekennzeichnet, dass** Koppelelemente (16) zum Anbringen einer Ladeplattform (17) vorgesehen sind.

10. Wiegeelement nach Anspruch 9, **dadurch gekennzeichnet, dass** die Koppelelemente (16) mit einem Scharnierpunkt (28) versehen sind.

11. Wiegeelement nach Anspruch 9 oder 10, **dadurch gekennzeichnet, dass** die Koppelelemente (16) mit einer Führung versehen sind, die es ermöglicht, die Bewegung der Ladeplattform (17) in Bezug auf das Wiegeelement (1) auf im Wesentlichen eine Richtung zu begrenzen.

12. Wiegeelement nach einem der vorgenannten Ansprüche, **dadurch gekennzeichnet, dass** es in das Chassis (24) eines Fahrzeugs (25) integriert ist oder Teil davon ist.

13. Chassis (24) eines Fahrzeugs (25), **dadurch gekennzeichnet, dass** mindestens ein Teil aus zwei oder mehr Wiegeelementen (1) nach einem der vorgenannten Ansprüche gebildet ist.

14. Chassis nach Anspruch 13, **dadurch gekennzeichnet, dass** die Richtung (AA') gegenüberliegender Seiten (6, 7) der Wiegeelemente (1) der Längsrichtung (LL') des Fahrzeugs (25) entspricht.

## Revendications

1. Élément de pesée (1), **caractérisé en ce qu'**il est au moins constitué par un châssis (2) et par deux paires de lecteur de force (3, 4) sur deux côtés opposés (6, 7) du châssis (2), les lecteurs de force (3, 4) de chaque paire étant situés à une distance (D) l'un de l'autre dans la direction (AA') des côtés opposés susmentionnés (6, 7) et s'étendant dans une direction (BB') transversale ou inclinée par rapport aux côtés opposés susmentionnés (6, 7), les lecteurs de force (3, 4) étant en outre couplés avec une extrémité (8) au châssis (2) de l'élément de pesée (1), tandis que les autres extrémités (9) des lecteurs de force (3, 4) d'une paire susmentionnée sont reliées au moyen d'un élément de liaison (5) qui s'étend dans la direction (AA') des côtés opposés.

2. Élément de pesée selon la revendication 1, **caractérisé en ce que** le châssis (2) est formé principalement par deux entretoises longitudinales (10) qui sont couplées l'une à l'autre.

3. Élément de pesée selon la revendication 2, **caractérisé en ce que** les entretoises longitudinales (10) sont prévues parallèlement l'une à l'autre.

4. Élément de pesée selon la revendication 2 ou 3, **caractérisé en ce que** les entretoises longitudinales (10) s'étendent dans une direction (BB') transversale par rapport aux côtés opposés susmentionnés (6, 7).

5. Élément de pesée selon l'une quelconque des revendications 2 à 4, **caractérisé en ce que** les entretoises longitudinales (10) sont couplées au moyen d'une plaque (11).

6. Élément de pesée selon l'une quelconque des revendications 2 à 5, **caractérisé en ce que** les entretoises longitudinales susmentionnées (10) sont creuses et **en ce que**, dans chaque extrémité découpée (12) de chaque entretoise longitudinale (10), on prévoit un des lecteurs de force (3, 4).

7. Élément de pesée selon l'une quelconque des revendications précédentes, **caractérisé en ce que** les éléments de liaison (5) des paires de lecteurs de force (3, 4) sont couplés l'un à l'autre au moyen d'une liaison transversale (13).

8. Élément de pesée selon les revendications 2 et 7, **caractérisé en ce que** la liaison transversale susmentionnée (13) est prévue entre les entretoises longitudinales (10) du châssis (2).

9. Élément de pesée selon l'une quelconque des revendications précédentes, **caractérisé en ce que** des éléments de couplage (16) sont prévus pour procurer une plate-forme de chargement (17).

10. Élément de pesée selon la revendication 9, **caractérisé en ce que** les éléments de couplage (16) sont munis d'un point d'articulation (28).

11. Élément de pesée selon la revendication 9 ou 10, **caractérisé en ce que** les éléments de couplage (16) sont munis d'un guide qui permet de restreindre le mouvement de la plate-forme de chargement (17) par rapport à l'élément de pesée (1) dans principalement une direction.

12. Élément de pesée selon l'une quelconque des revendications précédentes, **caractérisé en ce qu'**il est intégré dans le châssis (24) d'un véhicule (25) ou fait partie dudit châssis.

13. Châssis (24) d'un véhicule (25) **caractérisé en ce qu'**au moins une partie est constituée par deux éléments de pesée (1) ou plus selon l'une quelconque des revendications précédentes.

14. Châssis selon la revendication 13, **caractérisé en ce que** la direction (AA') des côtés opposés (6, 7) des éléments de pesée (1) correspond à la direction longitudinale (LL') du véhicule (25).
